**Europäisches Patentamt**

(19) **European Patent Office**

**Office européen des brevets**

(11) Numéro de publication: **0 141 724**
**B1**

(12) # FASCICULE DE BREVET EUROPÉEN

(45) Date de publication du fascicule du brevet:
03.02.88

(51) Int. Cl.⁴: **G 02 B 27/00,** B 23 K 26/04,
G 01 B 11/26

(21) Numéro de dépôt: **84402122.0**

(22) Date de dépôt: **22.10.84**

(54) Dispositif d'asservissement pour l'alignement automatique d'un faisceau laser.

(30) Priorité: **24.10.83 FR 8316912**

(43) Date de publication de la demande:
**15.05.85 Bulletin 85/20**

(45) Mention de la délivrance du brevet:
**03.02.88 Bulletin 88/5**

(84) Etats contractants désignés:
**BE CH DE GB IT LI SE**

(56) Documents cité:
**FR-A-2 028 881**
**US-A-4 035 654**
**US-A-4 079 230**
**US-A-4 243 888**

(73) Titulaire: **COMMISSARIAT A L'ENERGIE
ATOMIQUE, 31/33, rue de la Fédération, F-75015
Paris (FR)**

(72) Inventeur: **Dupeyrat, Benoît, 5, Square
Montpensier, F-91380 Chilly- Mazarin (FR)**
Inventeur: **Mardon, Nathalie, 11, rue Aylé, F-92290
Chatenay Malabry (FR)**
Inventeur: **Noel, Jean- Paul, 22Bis, rue des
Grillons, F-92290 Chatenay malabry (FR)**

(74) Mandataire: **Mongrédien, André, c/o BREVATOME
25, rue de Ponthieu, F-75008 Paris (FR)**

EP 0 141 724 B1

## Description

La présente invention concerne un dispositif d'asservissement pour l'alignement automatique d'un faisceau laser. Elle s'applique notamment aux domaines d'exploitation de l'énergie d'un faisceau laser, dans lesquels le faisceau doit être dirigé selon une direction privilégiée. L'invention s'applique en particulier à l'usinage par laser qui nécessite de diriger un faisceau issu d'un laser de puissance vers l'orifice d'une buse, par l'intermédiaire d'une optique de focalisation.

Les faisceaux lasers considérés sont ceux dont la distribution énergétique transversale présente sensiblement une symétrie centrale. Il s'agit en particulier des faisceaux lasers sensiblement gaussiens, issus de lasers émettant sensiblement suivant le mode fondamental $TEM_{00}$.

On connaît des détecteurs d'alignement, ou positionnement, d'un faisceau laser, qui sont du type pyroélectrique. De tels détecteurs présentent l'inconvénient de mal supporter de fortes densités de puissance énergétique, ce qui limite leur emploi à des faisceaux lasers d'assez faible énergie et empêche de les utiliser avec des lasers de puissance.

On connaît d'autres détecteurs d'alignement d'un faisceau laser, utilisables avec des lasers de puissance, et comportant pour ce faire des moyens de détection thermoélectriques fixés sur des surfaces de mesure thermiquement absorbantes jouant le rôle de corps noirs (US-A-4 035 654). Ces autres détecteurs présentent l'inconvénient d'avoir des temps de réponse lents, proportionnels à la diffusion de la chaleur dans les surfaces absorbantes. Ils présentent également l'inconvénient de comporter de très grandes surfaces de mesure qui absorbent une grande partie de l'énergie du faisceau laser incident, ce qui est très gênant lorsque ce faisceau est utilisé en continu pour un usinage, opération qui nécessite une forte densité d'énergie.

La présente invention a justement pour objet un dispositif d'asservissement pour l'alignement d'un faisceau laser, utilisant un détecteur thermoélectrique d'alignement qui ne présente pas les inconvénients précédents, notamment en ce qu'il peut être utilisé avec un faisceau laser de très forte densité de puissance et en ce qu'il présente des temps de réponse très courts lui permettant de détecter une déviation rapide du faisceau, ceci avec un "effet d'ombre" très réduit, c'est-à-dire en ne prélevant qu'une très faible partie d'énergie du faisceau pour détecter ce dernier.

De façon précise, la présente invention a pour objet un dispositif d'asservissement pour l'alignement automatique sur une cible, d'un faisceau laser dont la distribution énergétique transversale présente sensiblement une symétrie centrale, comprenant:

- des moyens de déflexion du faisceau laser en direction de la cible,
- deux moteurs prévus pour modifier la déflexion du faisceau respectivement suivant deux axes perpendiculaires entre eux et à la droite joignant la cible à leur intersection, en modifiant l'orientation des moyens de déflexion,
- deux codeurs incrémentaux respectivement associés aux moteurs, chaque codeur incrémental étant apte à engendrer des impulsions électriques fonctions de l'angle et du sens de rotation du moteur auquel il est associé,
- un détecteur thermoélectrique disposé entre la cible et les moyens de déflexion, et apte à fournir, en fonction d'un désalignement du faisceau suivant au moins l'un des axes, une différence de tension électrique sensiblement proportionnelle à la déviation du faisceau suivant l'axe considéré, et
- un système électronique de traitement prévu pour commander les moteurs en fonction des différences de tension électrique et des impulsions engendrées par les codeurs incrémentaux, de façon à maintenir le faisceau aligné sur la cible,

caractérisé en ce que le détecteur thermoélectrique comprend deux paires de thermocouples dont les soudures chaudes sont dans le faisceau laser et sur un cercle dont le plan est perpendiculaire à la trajectoire du faisceau, en ce que les soudures chaudes correspondant à l'une des paires appartiennent à un diamètre du cercle et en ce que les soudures chaudes correspondant à l'autre paire appartiennent à un autre diamètre du cercle, perpendiculaire audit diamètre, ledit diamètre et ledit autre diamètre étant respectivement parallèles audits axes et se rencontrant sur ladite droite, les deux soudures chaudes de chaque paire se trouvant à la même température lorsque le faisceau est aligné sur la cible, en provenance des moyens de déflexion, de manière à obtenir la différence de tension électrioue relative à un axe entre les deux soudures chaudes de la paire de thermocouples correspondant à cet axe, et en ce que le système électronique de traitement comprend:

- une interface électronique d'entrée-sortie, reliée aux moteurs et aux thermocouples et munie de deux compteurs d'impulsions respectivement reliés aux codeurs incrémentaux, et
- des moyens électroniques de traitement, reliés à l'interface et prévus, après désalignement du faisceau laser, pour déterminer d'une part l'état à atteindre par chaque compteur pour réaligner le faisceau, en fonction des différences de tension électrique et de l'état de chaque compteur avant le désalignement, et d'autre part, les tensions électriques à appliquer successivement à chaque moteur jusqu'à l'obtention du réalignement, en fonction de l'état à atteindre par le compteur correspondant et des états successifs de ce compteur.

Les thermocouples sont choisis en rapport avec la gamme de températures à mesurer. Ce sont par exemple des thermocouples chromel-alumel ou tungstène-rhénium qui sont utilisables.

Selon un mode de réalisation préféré de l'invention, le système électronique de traitement comporte un filtre passe-bas pour filtrer les signaux électriques émis par les thermocouples excités par le faisceau laser, de manière à en éliminer les signaux résultant d'une instabilité du système laser.

Enfin, les moyens électroniques de traitement sont de préférence prévus pour réaliser un lissage des températures mesurées par les thermocouples en moyennant un nombre de température mesurées, choisi tel que la fréquence de coupure du filtre passe-bas ainsi réalisé par le lissage, soit inférieure à la fréquence de l'instabilité du système laser.

Un dispositif d'asservissement tel que défini dans le préambule de la revendication 1 est décrit dans le brevet US-A-4 243 888.

L'invention sera mieux comprise à la lecture de la description qui suit, d'exemples de réalisation donnés à titre indicatif et non limitatif, en référence aux dessins annexés sur lesquels:

- la figure 1 est une vue schématique d'un mode de réalisation particulier du détecteur utilisé dans l'invention,

- la figure 2 est un diagramme montrant la distribution énergétique transversale d'un faisceau laser gaussien,

- la figure 3 est une vue schématique d'un mode de réalisation particulier du dispositif d'asservissement objet de l'invention, appliqué à l'usinage par faisceau laser,

- la figure 4 est un schéma de l'asservissement réalisé pour ce dispositif,

- la figure 5 est une vue en coupe schématique d'un montage d'un miroir utilisé dans le dispositif représenté sur la figure 3,

- la figure 6 est une vue arrière schématique du montage,

- la figure 7 est une vue d'un support des thermocouples utilisés dans ce dispositif,

- la figure 8 est une vue schématique d'un système électronique de traitement utilisable avec le dispositif,

- la figure 9 est une vue schématique d'une partie de ce système, correspondant à l'entrée des signaux issus des thermocouples utilisés avec le dispositif,

- la figure 10 est une vue schématique d'une autre partie du système, correspondant à l'entrée des impulsions issues de codeurs incrémentaux utilisés avec le dispositif,

- les figures 11A à 11E sont des diagrammes temporels de signaux traités dans cette autre partie,

- la figure 12 est une vue schématique d'une interface de sortie de signaux issus de moyens électroniques de traitement appartenant audit système, et

- la figure 13 est un organigramme général d'un programme d'asservissement exécutable par les moyens électroniques de traitement.

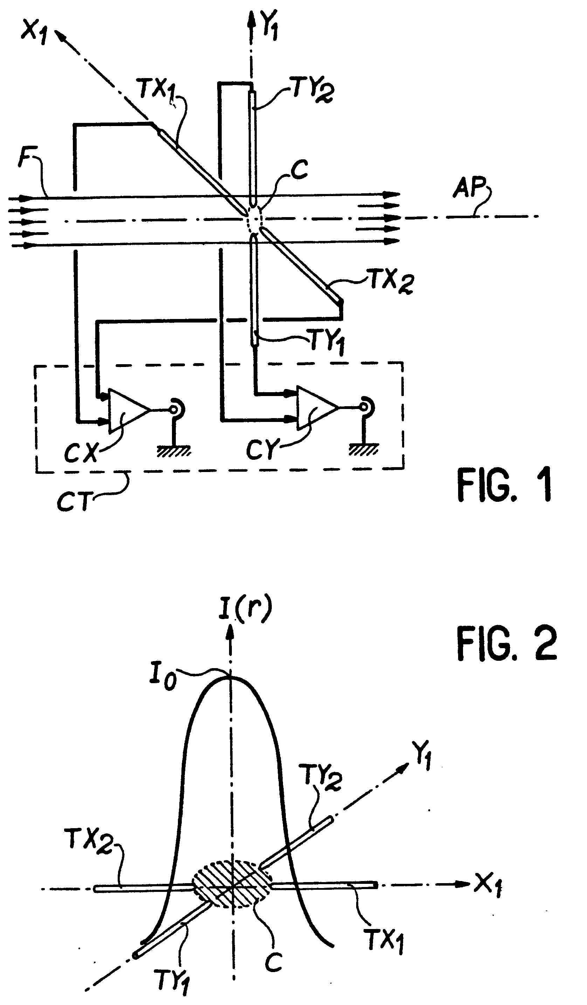

Sur la figure 1, on a représenté schématiquement un mode de réalisation particulier du détecteur utilisé dans l'invention. Il comprend une paire de thermocouples $TX_1$ et $TX_2$ dont les soudures chaudes sont diamétralement opposées sur un cercle C intérieur au faisceau laser F à étudier et situé dans un plan perpendiculaire au faisceau. Il comprend également une autre paire de thermocouples $TY_1$ et $TY_2$ dont les soudures chaudes sont diamétralement opposées sur le cercle C, sur un axe $X_1$ perpendiculaire à un axe $Y_1$ qui joint les soudures chaudes des thermocouples $TX_1$ et $TX_2$. Les thermocouples sont montés sur des supports non représentés.

Les thermocouples sont en outre reliés à un moyen CT d'analyse des signaux émis par ces thermocouples, moyen appelé "centralisateur", qui comprend par exemple un comparateur ADX aux entrées duquel sont envoyés les signaux émis par les thermocouples $TX_1$ et $TX_2$ et un autre comparateur ADY aux entrées duquel sont envoyés les signaux émis par les thermocouples $TY_1$ et $TY_2$.

Si le faisceau F est correctement centré sur le détecteur, c'est-à-dire si son axe principal AP passe par le centre du cercle C, les thermocouples mesurent tous une même température et l'on n'observe aucun signal en sortie des comparateurs. Une déviation du faisceau suivant la direction $X_1$ (et/ou $Y_1$) entraîne une différence de température entre les thermocouples $TX_1$ et $TX_2$ (et/ou $TY_1$ et $TY_2$) et l'on observe un signal en sortie du comparateur CX (et/ou CY) à partir duquel on peut déterminer la déviation du faisceau comme on le verra par la suite.

Les thermocouples sont par exemple réalisés avec des fils de chromel-alumel de faible diamètre, de l'ordre de 0,1 mm par exemple, et à tête nue. De tels thermocouples peuvent être utilisés dans un domaine de températures allant environ de -270°C à 1370°C et sont donc utilisables avec un faisceau issu d'un laser dont la puissance peut atteindre, voire dépasser, 3 kW.

Sur la figure 2, on a représenté un diagramme montrant la distribution énergétique transversale d'un faisceau laser F gaussien. L'intensité du faisceau F considéré dans le plan $(X_1, Y_1)$, à la distance r de l'intersection des axes $X_1$ et $Y_1$, peut s'écrire:

$$I(r) = I_0 \exp(-2r^2/w^2_0) \quad (1)$$

la quantité $w_0$ s'interprétant comme la distance à laquelle l'intensité maximale $I_0$ est divisée par $e^2$ et qui correspond, de préférence, au rayon du cercle C.

Etant donné que la température enregistrée par un thermocouple est proportionnelle à l'intensité du faisceau, reçue par ce thermocouple, si $r_R$ désigne le rayon du cercle C lorsque l'axe principal ou central du faisceau passe par le centre de ce cercle, et si $T_R$ désigne la température enregistrée par les thermocouples sur le cercle C, on peut montrer qu'une déviation $\Delta r$ subie par l'axe principal du faisceau est sensiblement reliée à la variation de température

$\Delta T$ détectée entre deux thermocoples diamétralement opposés, par la relation

$$\Delta r = K.\Delta T \quad (2)$$

où K est une constante telle que:

$$K = w^2_0/(4\, r_R\, T_R)$$

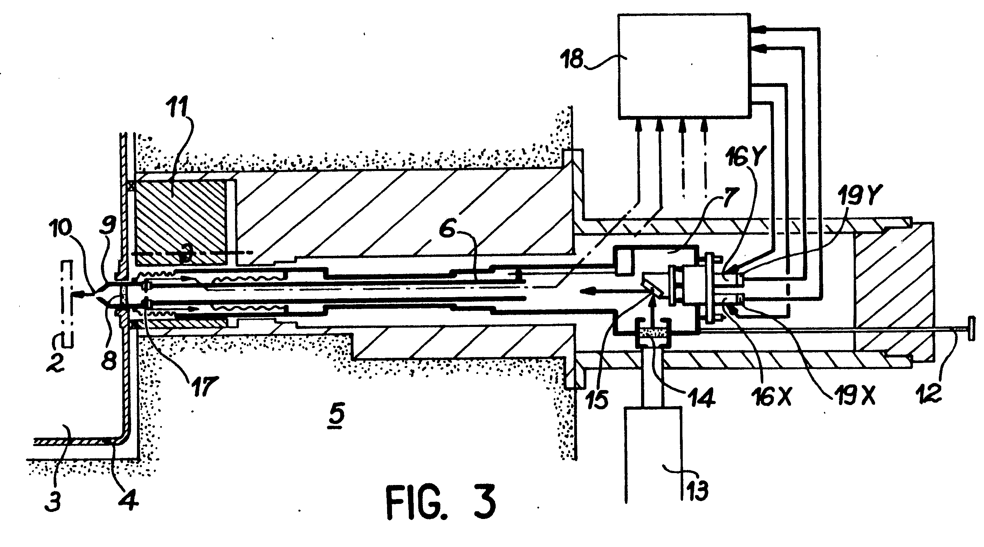

Sur la figure 3, on a représenté schématiquement un mode de réalisation particulier du dispositif d'asservissement objet de l'invention, utilisé pour maintenir en permanence le faisceau aligné sur une cible, par exemple dans le domaine, indicatif mais non limitatif, de l'usinage par faisceau laser. La figure 3 montre une installation d'usinage par faisceau laser de puissance, du genre de celle qui a été décrite dans la demande de brevet français n° 8 101 810 du 30 janvier 1981, et qui permet l'usinage d'une pièce 2 située à l'intérieur d'une enceinte 3 susceptible de contenir des matériaux fortement radioactifs et délimitée par une paroi de confinement 4. Une paroi épaisse de béton 5 assure une protection contre le rayonnement des matériaux contenus dans l'enceinte 3.

L'installation comprend un tube 6 communiquant par une extrémité avec une chambre 7 et terminé, à son autre extrémité, par une tête d'usinage pourvue d'une lentille de focalisation 8 suivie par une buse 9 d'orifice 10. La tête d'usinage est apte à pénétrer dans l'enceinte 3 et rétractable derrière un barillet de protection 11. Une tige 12 permet de déplacer la chambre 7 et le tube 6 en translation.

Un laser d'usinage 13, situé à l'extérieur de l'enceinte 3, est apte à émettre un faisceau qui traverse une fenêtre 14 puis est ensuite dévié par un miroir de renvoi 15 situé dans la chambre 7, pour se propager dans le tube 6 et atteindre la pièce 2 après avoir traversé la lentille 8 et l'orifice 10 de la buse.

Le dispositif d'alignement selon l'invention permet au faisceau de traverser cet orifice en permanence, sans dévier de façon appréciable, ce qui détériorerait la buse, et comprend essentiellement le miroir 15 associé à deux moteurs 16X et 16Y pour l'orientation du miroir, un détecteur 17 du genre de celui qui a été décrit en référence à la figure 1, et un système électronique de traitement 18. Le dispositif comprend également des codeurs incrémentaux 19X et 19Y respectivement associés aux moteurs 16X et 16Y.

Le détecteur est monté dans le tube 6 à une faible distance de l'orifice 10 et de façon que l'axe du tube 6 passe par l'orifice et par le centre du cercle sur lequel se trouvent les soudures chaudes des thermocouples. Le détecteur est par exemple monté au voisinage de la lentille 8, entre celle-ci et le miroir 15. Ce dernier est incliné à 45° sur l'axe du tube 6 lorsque le faisceau est correctement réglé pour atteindre l'orifice 10 en se propageant suivant l'axe du tube 6.

Le système électronique de traitement 18 est relié aux thermocouples du détecteur 17, aux moteurs 16X et 16Y et aux codeurs 19X et 19Y.

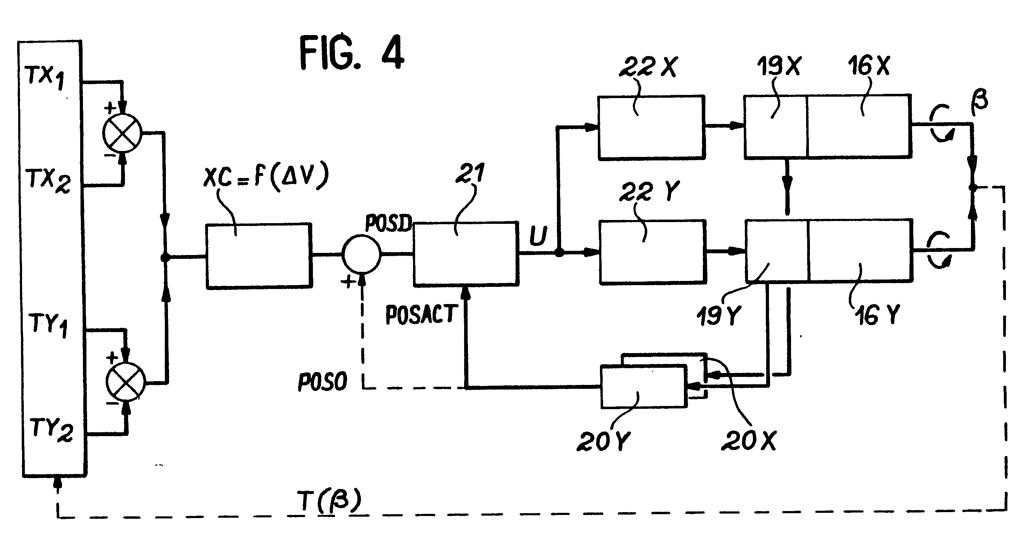

Sur la figure 4, on a représenté un schéma de l'asservissement réalisé pour le dispositif selon l'invention, représenté sur la figure 3. Les moteurs 16X et 16Y permettent de modifier la déflexion du faisceau suivant deux axes X et Y perpendiculaires à l'axe du tube 6, se coupant sur celui-ci, et respectivement parallèles aux axes $X_1$ et $Y_1$. Pour une meilleure compréhension de la figure 4, seul est complètement représenté l'asservissement relatif à l'axe Y, au moteur 16Y et aux thermocouples $TY_1$ et $TY_2$.

Les codeurs incrémentaux 19X et 19Y sont respectivement reliés à des compteurs 20X et 20Y, eux mêmes reliés à des moyens électroniques de traitement 21 faisant partie du système 18. Ces compteurs enregistrent des impulsions engendrées par les codeurs, chaque tour d'un moteur correspondant à un nombre donné d'impulsions.

En considérant l'exemple de l'asservissement correspondant à un désalignement du faisceau suivant l'axe Y, le dispositif cherche à annuler la différence de tension électrique $\Delta V$ apparaissant du fait du désalignement, entre les thermocouples $TY_1$ et $TY_2$: les moyens de traitement 21 déterminent le nombre XC d'impulsions (qui est une fonction f de $\Delta V$) à compter par le compteur 20Y pour que celui-ci passe de son état POSO avant asservissement à son état final POSD après réalignement du faisceau et déterminent également les tensions électriques U à appliquer successivement au moteur 16Y par l'intermédiaire d'un amplificateur de puissance 22Y (ayant un homologue 22X associé au moteur 16X) jusqu'à l'obtention du réalignement, en fonction de l'état POSD et des états successifs POSACT du compteur 20Y au cours de l'asservissement. On peut de ce fait écrire:

$$U = A\ (POSD - POSACT)$$

où A désigne le gain proportionnel que l'on peut prendre égal à 2.

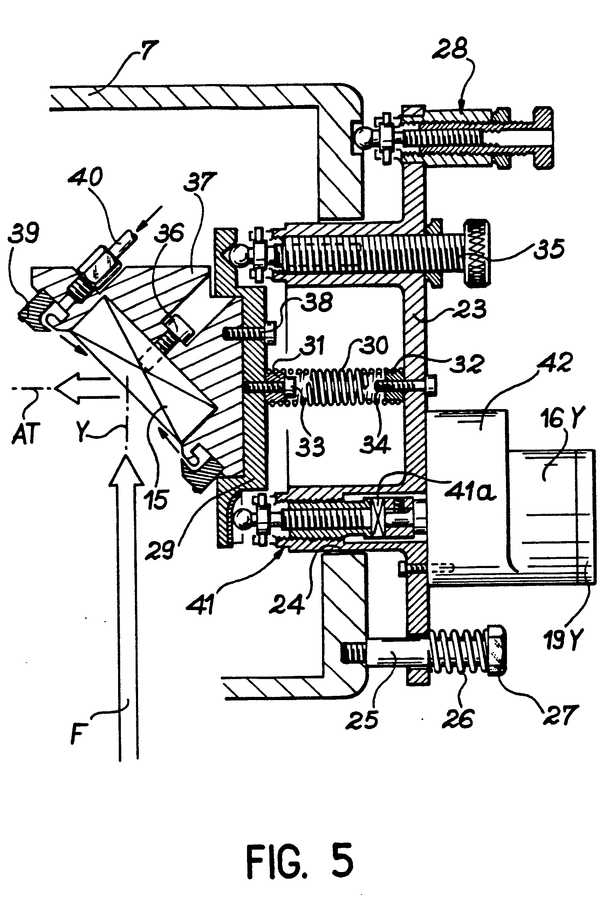

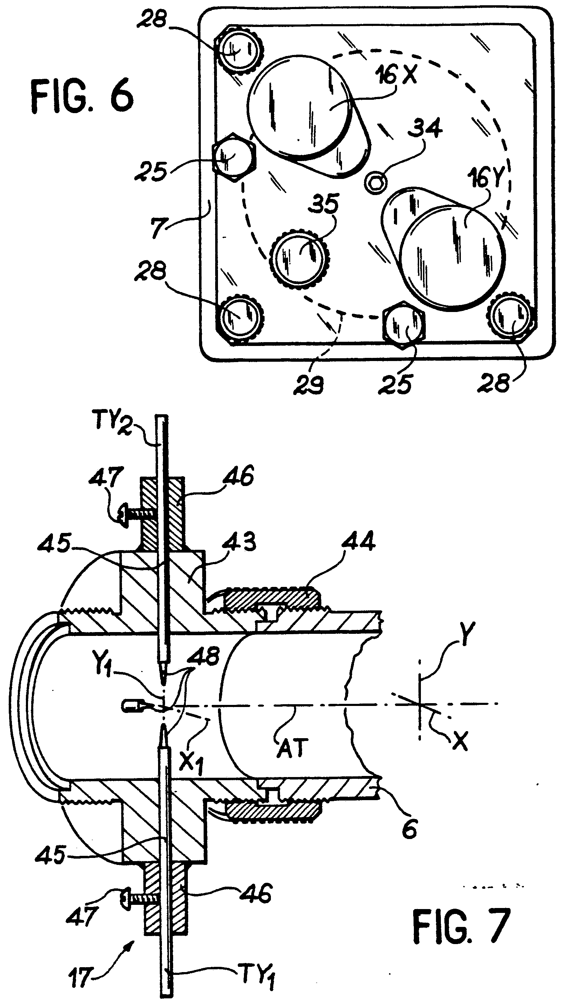

La figure 5 est une vue en coupe schématique du montage du miroir 15 dans la chambre 7 (qui est bien entendu percée pour l'entrée du faisceau F). Sur la figure 5, on a supposé l'axe AT du tube 6 horizontal. Le faisceau F entre verticalement dans la chambre 7, par le bas de celle-ci et se réfléchit suivant l'axe AT sur le miroir 15 incliné à 45° par rapport à l'axe AT. Le montage comprend un plateau 23 extérieur à la chambre 7 et dont une extrémité pénètre dans celle-ci à travers une ouverture 24 d'axe AT, pratiquée dans la chambre 7. Le plateau 23 est maintenu sur la chambre 7 par deux vis 25 (figures 5 et 6) traversant le plateau 23 et vissées dans la chambre, des ressorts 26 étant interposés entre les têtes 27 des vis 25 et le plateau 23. Trois vis différentielles 28 (figures 5 et 6), mobiles en rotation-translation par rapport au plateau 23 et appuyant sur la chambre 7, permettent un déplacement du plateau par rapport à la chambre 7.

Le montage comprend également une platine 29 située dans la chambre 7 et fixée au plateau 23 par l'intermédiaire d'un ressort 30 dont les extrémités sont solidaires de rondelles 31, 32 respectivement fixées à la platine et au plateau par des vis 33, 34. Une vis différentielle 35, mobile en rotation-translation par rapport au plateau et appuyant sur la platine, permet une orientation manuelle de la platine par rapport à la chambre 7. Le miroir 15 est fixé par une vis 36 à un bloc support 37, lui-même fixé à la platine 29 par des vis 38. Le miroir 15 est en outre refroidi par air, au moyen d'une buse circulaire 39 située à la périphérie du miroir et alimentée par un conduit 40 d'arrivée d'air. Deux autres vis différentielles 41 sont mobiles en rotation-translation par rapport au plateau et appuient sur la platine 29. Elles sont respectivement entraînées par les moteurs 16X et 16Y solidaires du plateau, par l'intermédiaire de réducteurs 42, et sont positionnées de façon à permettre respectivement les déviations du faisceau suivant les axes X (horizontal) et Y (vertical). La course des vis différentielles 41 est limitée au moyen d'une butée de fin de course par microrupteur 41a engendrant un signal arrêtant le moteur et éventuellement le laser.

A titre indicatif et nullement limitatif: le pas des vis 41 est de 0,02 mm; les moteurs sont des moteurs à courant continu commercialisés par la société ESCAP sous la référence 34L12-219P; les réducteurs ont un rapport de 1/135; les codeurs sont des codeurs optiques à 192 lignes et à deux canaux donnant des signaux de sortie déphasés de $\pi/2$, de manière à connaître le sens de rotation des moteurs.

Sur la figure 7, on a représenté schématiquement le montage du détecteur 17 sur le tube 6. Il est interposé entre celui-ci et la tête d'usinage et comprend un raccord tubulaire 43 assemblé au tube 6 à l'aide d'une bague femelle 44 (l'assemblage avec la tête d'usinage étant réalisé de façon identique et non représenté). Quatre trous radiaux coplanaires 45, à 90° les une des autres, traversent le raccord 43 et sont prolongés par des manchons 46. Les thermocouples, munis de gaines de soutien et de protection, sont enfilés par ces manchons et ces trous et maintenus en place par des vis de blocage 47, les quatre soudures chaudes 48 étant cocycliques, comme on l'a vu plus haut. En outre, les thermocouples sont "à tête nue", c'est-à-dire dénudés sur une longueur maximale et positionnés de façon que les soudures chaudes soient aussi proches que possible de l'axe du tube 6, de manière à obtenir des signaux exploitables pour un faisceau de faible puissance, tout en restant dans des zones de températures supportables si le faisceau est de forte puissance.

On revient à présent sur la quantité XC considérée plus haut, quantité qui est bien entendu positive ou négative suivant le sens de rotation du moteur considéré. Cette quantité est proportionnelle au mouvement (avance ou recul) $\Delta VIS$ à imposer à la vis différentielle 41 correspondante. En tenant compte du fait qu'une déviation verticale (suivant Y) du faisceau, d'un angle $\beta$, est compensée par une rotation du miroir 15, d'un angle $\beta/2$, et qu'une déviation horizontale (suivant X) du faisceau, d'un angle $\beta$, est compensée par une rotation du miroir 15, d'un angle $\beta$, on en déduit que $\Delta VIS$ est proportionnel à $\Delta r/2$ dans le cas d'une déviation $\Delta r$ verticale et à $\Delta r$ dans le cas d'une déviation $\Delta r$ horizontale, avec la même constante de proportionnalité. La quantité XC peut donc être reliée à la quantité $\Delta T$ de la formule (2) considérée plus haut et donc à la quantité $\Delta V$ proportionnelle à $\Delta T$.

Le coefficient K de la formule (2) est déterminé au début de l'utilisation du faisceau laser avec alignement automatique, à raison d'une détermination pour chaque axe X ou Y, en faisant dévier le faisceau d'une valeur $\Delta r$ (suivant X ou Y), en déterminant la variation $\Delta T$ correspondante et en calculant le rapport $\Delta r/\Delta T$, égal à K d'après la formule (2).

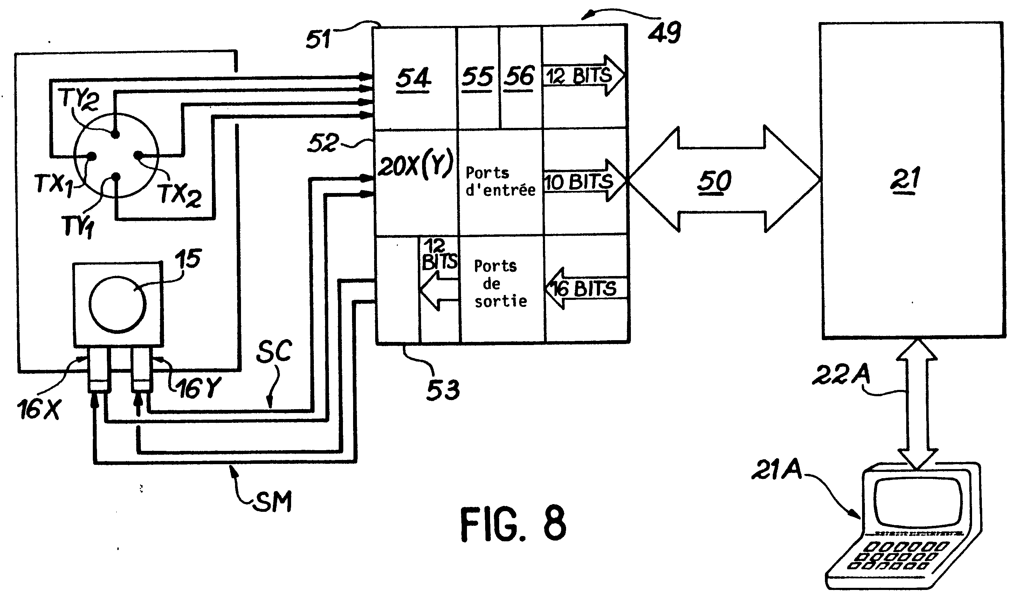

Sur la figure 8, on a représenté schématiquement un mode de réalisation particulier du système électronique de traitement faisant partie du dispositif selon l'invention, représenté sur la figure 3. Il comprend une interface électronique d'entrée-sortie 49 et les moyens électroniques de traitement 21. Ces derniers sont constitués par un processeur, par exemple un microprocesseur du type 8086 de la société INTEL auquel on associe un processeur numérique du type 8087 de INTEL, permettant le traitement en virgule flottante, l'ensemble étant implanté sur une carte microprocesseur du type SBC 8614 de INTEL, qui dispose de 32 K-octets de mémoire vive (extensible à 64 K-octets) et de 32 K-octets de mémoire PROM, et qui est entièrement compatible avec le standard MULTIBUS qui supporte des transferts de données par 16 éléments binaires ou bits, et permet d'utiliser les cartes d'extension du type SBC, 8 ou 16 bits, de INTEL. En outre, le processeur 8086 de INTEL est un microprocesseur adressable de 1 Méga-octets.

L'interface d'entrée-sortie 49 relie les moteurs, les thermocouples et les codeurs incrémentaux à la carte SBC 8614. Elle est implantée sur une carte du type SBC 905 de INTEL, reliée à la carte SBC 8614 par un bus 50 de 16 bits de données, conforme au standard MULTIBUS.

L'interface 49 comprend essentiellement des moyens 51 pour le traitement des tensions des thermocouples, des moyens 52 pour le traitement des impulsions SC provenant des codeurs incrémentaux et des moyens 53 pour le traitement des signaux de commande des moteurs, issus des moyens de traitement 21, les signaux SM de commande des moteurs, une fois traités, étant envoyés vers les moteurs. Sur la figure 8, on aperçoit également une console de commande 21A reliée à la carte SBC 8614 par un bus 22A du type Rs 232 de INTEL par exemple.

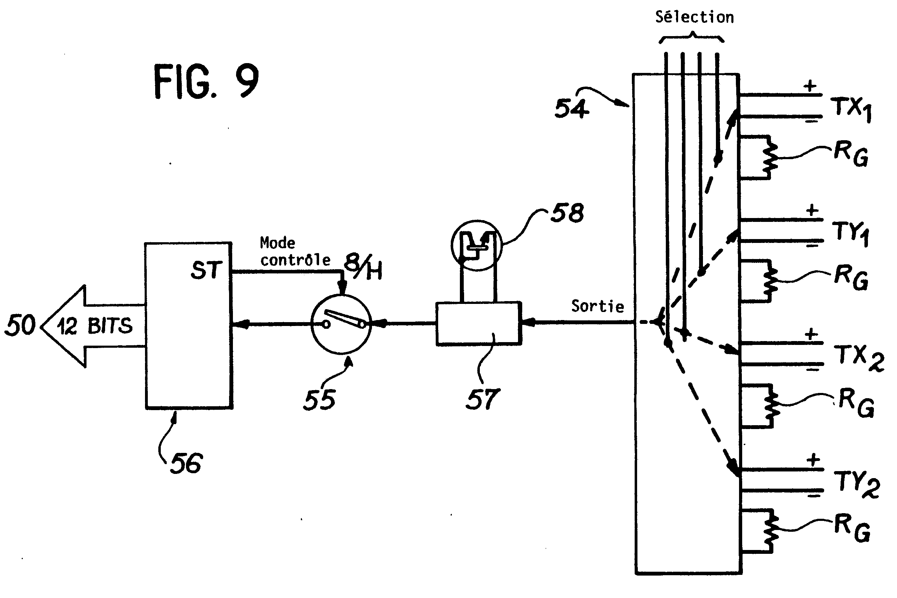

Les moyens 51 pour le traitement des tensions des thermocouples comprennent essentiellement (figures 8 et 9) des moyens 54 de conditionnement par amplification, filtrage et multiplexage, suivis d'un échantilloneur-bloqueur 55, lui-même suivi d'un convertisseur analogique-numérique 56. Plus précisément, les tensions délivrées par, les quatre thermocouples sont à faible niveau (de l'ordre de 0 à 50 mV) et sont envoyées sur un circuit 54 par exemple du type 2B54 de la société ANALOG DEVICES qui les amplifie jusqu'à ± 5V et comporte quatre résistances $R_G$ respectivement associées aux quatre thermocouples et ajustables pour assurer le gain G tel que;

$$G = 10^4/R_G + 1$$

où $R_G$ est exprimé en $\Omega$.

Dans le cas de thermocouples chromel-alumel, une valeur de 111 $\Omega$ convient pour $R_G$. Chaque chaîne d'amplification est isolée galvaniquement des trois autres et associée à un filtre des signaux de 50 Hz. Les voies correspondant respectivement aux quatre thermocouples sont ensuite multiplexées vers une mémoire tampon de sortie (toujours dans le circuit 54). Pour que chaque tension traitée soit relative à une température vraie par rapport à 0°C, indépendante des variations de la température ambiante, les signaux des thermocouples sont envoyés, après multiplexage, sur un compensateur de jonction froide 57 par exemple du type 2B56 de la société ANALOG DEVICES, muni d'un capteur 58 de température par exemple constitué par un transistor 2N2222. La tension de jonction froide est amplifiée dans les mêmes proportions que les tensions des thermocouples.

Le signal analogique issu du compensateur 57, somme des tensions de mesure des thermocouples et de la tension de jonction froide, est ensuite numérisé par le convertisseur analogique-numérique 56 par exemple du type AD574, 12 bits, de ANALOG DEVICES. Pendant la lecture de la tension analogique, il convient de bloquer celle-ci par l'échantillonneur-bloqueur 55 par exemple du type SHC 298 de BURRBROWN. Le signal "status on" (ST) du convertisseur 56 indique l'état de celui-ci et sert de mode de contrôle à l'échantillonneur-bloqueur. Les 12 bits de sortie du convertisseur 56 sont envoyés directement sur le bus 50 et donnent une information codée des températures enregistrées par les thermocouples.

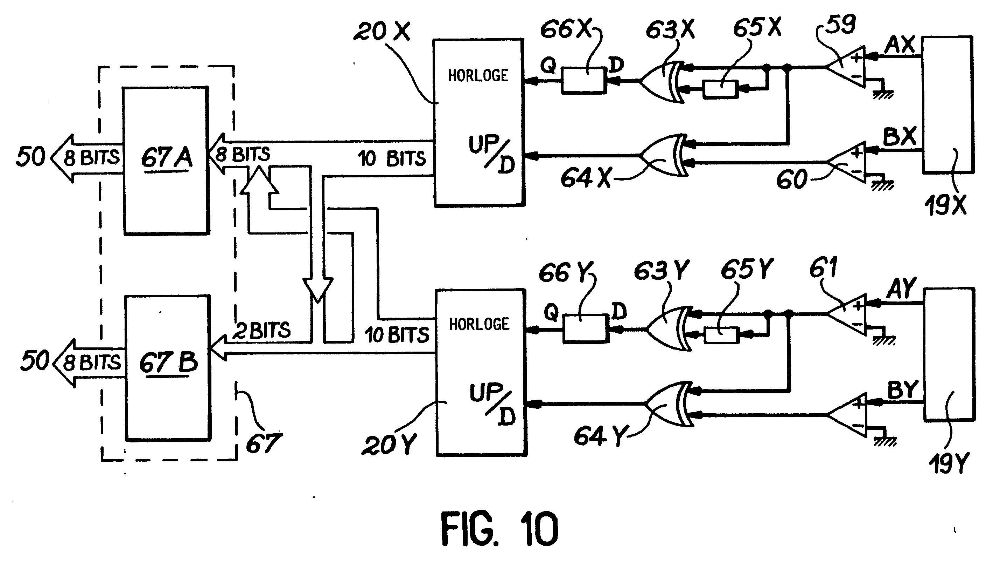

Les moyens 52 de traitement des signaux issus des codeurs comprennent essentiellement les compteurs 20X et 20Y (figure 10). Plus précisément, les impulsions délivrées par chaque voie AX ou BX (ou: AY ou BY) de chaque codeur 19X (ou: 19Y) sont des sinusoïdes non symétriques par rapport au zéro. Elles sont mises en forme par un amplificateur 59 ou 60 (ou: 61 ou 62) différentiel par exemple du type SN55115. Cette opération est effectuée près des codeurs optiques. Les signaux qui arrivent sur la carte d'interface 49 sont donc des signaux carrés décalés de $\pi/2$ les une par rapport aux autres. Les impulsions correspondant à un codeur 19X ou 19Y ainsi mises en forme, sont comptabilisées par un compteur 20X ou 20Y, 10 bits, du type LS 491, par exemple, qui se déclenche sur les fronts montants.

Pour une plus grande précision, la fréquence des impulsions est doublée: une impulsion négative est créée sur chacun des fronts des impulsions. C'est ce signal qui est comptabilisé. De façon précise, le signal mis en forme de la voie AX (ou AY) est envoyé à une entrée de deux circuits logiques OU exclusif (XOR) référencés 63X, 64X (ou 63Y, 64Y), et à l'autre entrée du circuit 63X (ou 63Y) par l'intermédiaire d'un circuit retard et inverseur 65X (ou 65Y), tandis que le signal mis en forme de la voie BX (ou BY) est envoyé à l'autre entrée du circuit 64X (ou 64Y).

De plus, la sortie du circuit 63X (ou 63Y) est reliée à l'entrée ("HORLOGE") du compteur 20X (ou 20Y) par l'intermédiaire d'une bascule 66X (ou 66Y), tandis que la sortie du circuit 64X (ou 64Y) est reliée à l'entrée UP/D ("comptage décomptage") du compteur 20X (ou 20Y). Chaque bascule permet de lire l'état du compteur correspondant pendant un changement d'état, cette bascule retenant l'impulsion pendant la lecture. Les 10 bits de sortie du compteur 20X (ou 20Y) sont transférés en parallèle vers le bus 50 par un "entraineur de données" (driver de données) 67 (réalisé à l'aide de deux drivers de données 67A, 67B du type 8283 de INTEL qui acceptent au maximum 8 bits chacun).

Le décalage de $\pi/2$ entre les deux signaux issus d'un codeur optique renseigne sur le sens de rotation du moteur associé et détermine le fonctionnement du compteur correspondant en compteur ou décompteur.

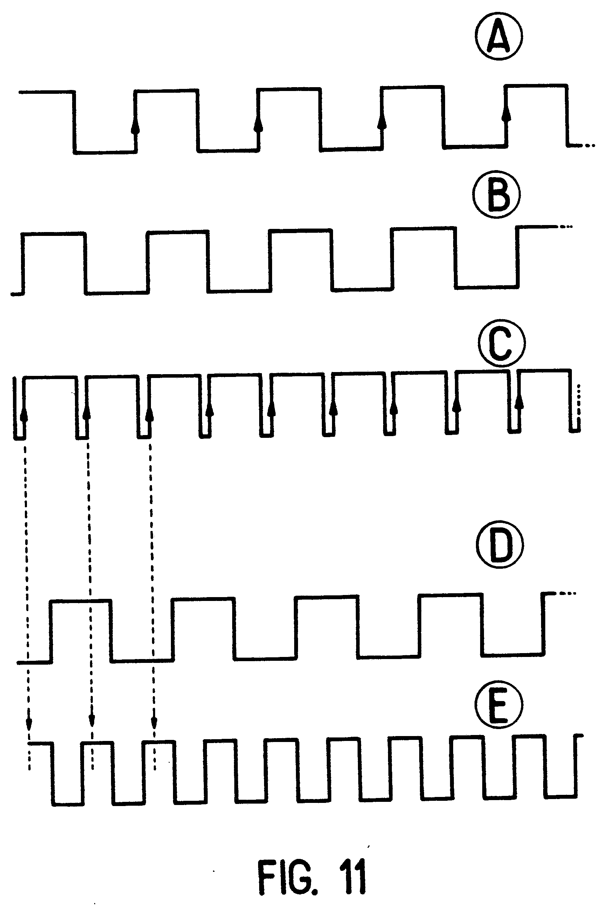

A titre explicatif, les figures 11A à 11E représentent les diagrammes temporels de signaux électriques engendrés par certains éléments électroniques du schéma de la figure 10; la figure 11A montre le signal issu de l'amplificateur 59 ou 61 (voie AX ou AY); la figure 11B montre le signal précédent retardé; la figure 11C montre le signal présent à la sortie du circuit XOR 63X ou 63Y; la figure 11D montre le signal issu de l'amplificateur 60 ou 62 (voie BX ou BY); et la figure 11E montre le signal issu du circuit XOR 64X ou 64Y. La figure 11C met en évidence le doublage de fréquence mentionné précédemment et la figure 11E met en évidence la possibilité de connaitre le sens de rotation des moteurs. Les pointillés verticaux indiquent les instants où les compteurs comptent.

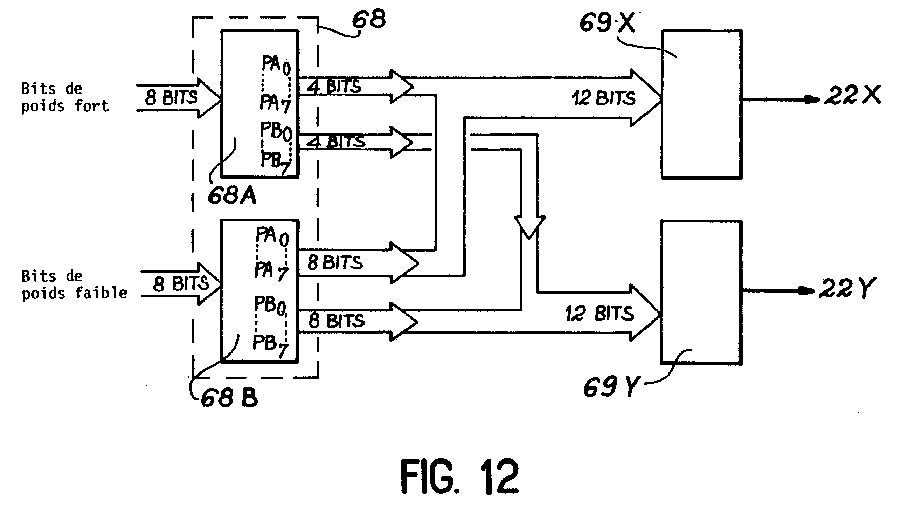

Après traitement par les moyens de traitement 21, les tensions de commande des moteurs sont issues du bus 50 sur 16 bits et transférées en parallèle à l'interface 49 par un interface programmable 68 réalisé (figure 12) à l'aide de deux interfaces programmables PPI8255 de INTEL programmés en sortie mode 0 référencés 68A et 68B sur la figure 12. Les signaux de commande du moteur 16X sortent par le port $PA_0$, ..., $PA_7$ de l'interface programmable tandis que les signaux de commande du moteur 16Y sortant par le port $PB_0$, ..., $PB_7$. Les moyens 53 de traitement des signaux de commande du moteur 16X ou 16Y comprennent essentiellement un convertisseur numérique-analogique 69X ou 69Y du type DAC 80 12 bits, qui convertit les tensions numériques correspondantes. Des amplificateurs de puissance 22X et 22Y, installés hors de l'interface 49, près des moteurs 16X et 16Y, mettent les tensions analogiques obtenues à niveau.

Le cadencement est réalisé sur l'interface 49 par des moyens connus non représentés. Une horloge de 30 Hz commande l'échantillonnage. La fréquence d'horloge du microprocesseur 8086 de INTEL est de 5 MHz. Elle est d'abord divisée par 4 par un compteur binaire puis pilote un cadenceur du type 8253 de INTEL, de la carte interface 49, qui, par programmation, engendre des impulsions de 30 Hz. La sortie du cadenceur est lue sur le bus à travers un bit disponible du driver. Le front montant des impulsions de 30 Hz est détecté par le programme du cadenceur.

En ce qui concerne les liaisons avec le bus 50, elles sont réalisées sur l'interface 49, d'une manière connue. Les adresses sur le bus 50 sont décodées par un codeur inverseur du type 8205 de INTEL. Une temporisation sur le signal de bonne transmission $\overline{XACK}$ est nécessaire pour permettre au système d'acquérir les données. La temporisation est réalisée par un circuit à décalage.

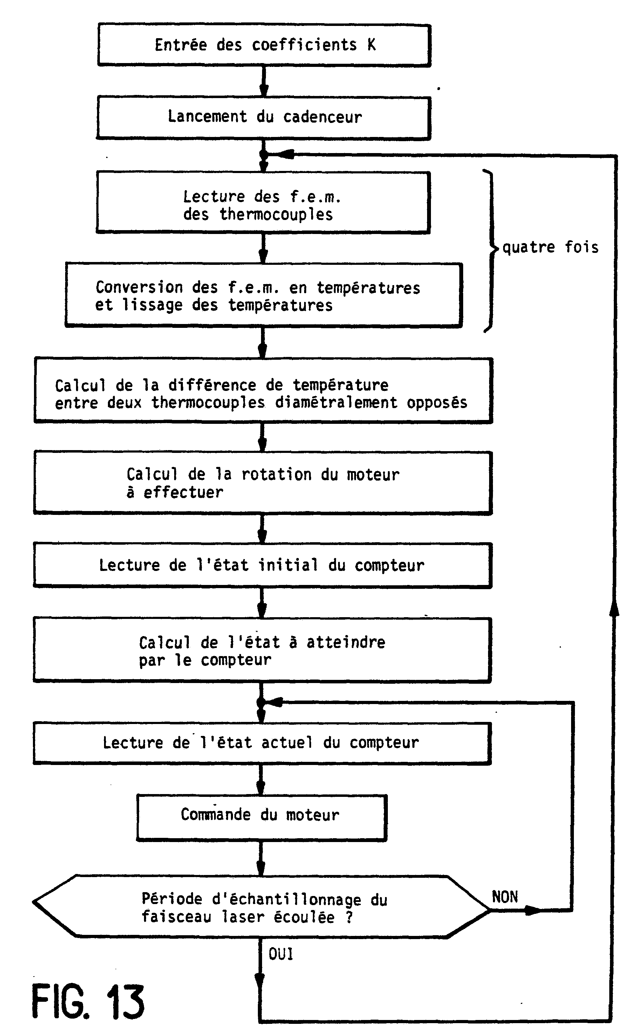

Sur la figure 13, on a représenté l'organigramme général d'asservissement. Le logiciel est écrit en langage évolué PLM 86 élaboré par la société INTEL pour les systèmes à base de microprocesseurs 8086.

Les différentes étapes successives du programme d'asservissement sont les suivantes: les coefficients K sont entrés. Le cadenceur est lancé. Les forces électromotrices (f.e.m.) des thermocouples sont lues, ces forces électromotrices sont converties en températures et les températures sont lissées, (ces étapes successives de lecture des f.e.m., de conversion de ces f.e.m. en températures et de lissage de celles-ci étant effectuées quatre fois, à raison de une fois par thermocouple). Ensuite: la différence de température entre deux thermocouples diamétralement opposés est calculée; la rotation du moteur correspondant à effectuer est calculée; l'état (POSO) initial du compteur correspondant est lue; l'état (POSD) à atteindre par le compteur est calculé; l'état actuel du compteur (POSACT) est lu; et le moteur est commandé; enfin, si la période (par exemple 30 ms) d'échantillonnage du faisceau laser (acquisition des températures) est écoulée, on se branche au début de l'étape de lecture des f.e.m. des thermocouples, sinon, on se branche au début de l'étape de lecture de l'état actuel du compteur.

Afin d'extraire du signal global délivré par chaque thermocouple, le signal à variation lente relatif à une déviation en direction, du faisceau, et d'en éliminer le signal à fluctuation plus rapide relatif à l'instabilité du système laser, on procède à un filtrage par lissage des valeurs de température, mesurées par les thermocouples, sur un grand nombre de ces valeurs, par exemple 128. Le lissage est réalisé par mémorisation des températures par exemple dans une pile cyclique, avec pointeur pour repérer le haut de la pile, puis calcul de la moyenne des températures ainsi mémorisées.

Bien entendu, on utilise une pile par thermocouple. En outre, lors de l'initialisation, c'est-à-dire lors du lancement de l'asservissement, tous les éléments d'une même pile contiennent la même valeur (seule valeur lue par le thermocouple correspondant).

## Revendications

1. Dispositif d'asservissement pour l'alignement automatique sur une cible (10), d'un faisceau laser dont la distribution énergétique transversale présente sensiblement une symétrie centrale, comprenant:
- des moyens (15) de déflexion du faisceau laser en direction de la cible (10),
- deux moteurs (16X, 16Y) prévus pour modifier la déflexion du faisceau respectivement suivant deux axes perpendiculaires entre eux et à la droite joignant la cible à leur intersection, en modifiant l'orientation des moyens de déflexion,
- deux codeurs incrémentaux (19X, 19Y) respectivement associés aux moteurs (16X, 16Y), chaque codeur incrémental étant apte à engendrer des impulsions électriques fonctions de l'angle et du sens de rotation du moteur auquel il est associé,
- un détecteur thermoélectrique (17) disposé entre la cible et les moyens (15) de déflexion, et apte à fournir, en fonction d'un désalignement du faisceau suivant au moins l'un des axes, une différence de tension électrique sensiblement proportionnelle à la déviation du faisceau suivant l'axe considéré, et
- un système électronique de traitement (18) prévu pour commander les moteurs en fonction des différences de tension électrique et des impulsions engendrées par les codeurs incrémentaux, de façon à maintenir le faisceau aligné sur la cible,
caractérisé en ce que le détecteur thermoélectrique comprend deux paires de thermocouples ($TX_1$, $TX_2$; $TY_1$, $TY_2$) dont les soudures chaudes sont dans le faisceau laser et sur un cercle (C) dont le plan est perpendiculaire à la trajectoire du faisceau, en ce que les soudures chaudes correspondant à l'une des paires appartiennent à un diamètre du cercle et en ce que les soudures chaudes correspondant à l'autre paire appartiennent à un autre diamètre du cercle, perpendiculaire audit diamètre, ledit diamètre et ledit autre diamètre étant respectivement parallèles audots axes et se rencontrant sur ladite droite, les deux soudures chaudes de chaque paire se trouvant à la même température lorsque le faisceau est aligné sur la cible, en provenance des moyens de déflexion de manière à obtenir la différence de tension électrique relative à un axe entre les deux soudures chaudes de la paire de thermocouples correspondant à cet axe, et en ce que le système électronique de traitement (18) comprend;

- une interface électronique d'entrée-sortie (49), reliée aux moteurs et aux thermocouples et munie de deux compteurs d'impulsions (20X, 20Y) respectivement reliés aux codeurs incrémentaux (19X, 19Y), et

- des moyens électroniques de traitement (21), reliés à l'interface (49) et prévus, après désalignement du faisceau laser, pour déterminer d'une part l'état à atteindre par chaque compteur pour réaligner le faisceau, en fonction des différences de tension électrique et de l'état de chaque compteur avant le désalignement, et d'autre part, les tensions électriques à appliquer successivement à chaque moteur jusqu'à l'obtention du réalignement, en fonction de l'état à atteindre par le compteur correspondant et des états successifs de ce compteur.

2. Dispositif selon la revendication 1, caractérisé en ce que le système électronique de traitement (18) comporte un filtre passe-bas pour filtrer les signaux électriques émis par les thermocouples excités par le faisceau laser, de manière à en éliminer les signaux résultant d'une instabilité du système laser.

3. Dispositif selon les revendications 1 et 2, caractérisé en ce que les moyens électroniques de traitement (21) sont prévus pour réaliser un lissage des températures mesurées par les thermocouples en moyennant un nombre de températures mesurées, choisi tel que la fréquence de coupure du filtre passe-bas ainsi réalisé par le lissage, soit inférieure à la fréquence de l'instabilité du système laser.

**Patentansprüche**

1. Regeleinrichtung zum selbsttätigen Ausrichten eines Laserstrahls, dessen energetische Querverteilung in wesentlichen eine zentrale Symmetrie aufweist, auf ein Ziel (10), enthaltend:

eine Einrichtung (15), um den Laserstrahl in Richtung auf das Ziel (10) abzulenken,

zwei Motoren (16X, 16Y), die dazu vorgesehen sind, die Ablenkung des Strahls in zwei Achsen, die zueinander senkrecht und in der Geraden sind, die das Ziel an ihrer Überschneidung trifft, zu verändern, indem die Ausrichtung der Ablenkeinrichtungen geändert wird,

zwei Schrittkodierer (19X, 19Y), die jeweils den Motoren (16X, 16Y) zugeordnet sind, wobei jeder Schrittkodierer dazu eingerichtet ist, elektrische Funktionsimpulse für den Winkel und den Drehsinn des zugeordneten Motors abzugeben,

einen thermoelektrischen Detektor (17), der zwischen dem Ziel und den Ablenkeinrichtungen (15) angeordnet und dazu eingerichtet ist, in Abhängigkeit von einer Fehlausrichtung des Strahls in wenigstens einer der Achsen eine elektrische Spannungsdifferenz abzugeben, die im wesentlichen proportional der Abweichung des Strahls von der betreffenden Achse ist, und

ein elektronisches Verarbeitungssystem (18), das dazu vorgesehen ist, die Motoren in Abhängigkeit von den elektrischen Spannungsdifferenzen und den von den Schrittkodierern gelieferten Impulsen so zu steuern, daß der Strahl auf das Ziel ausgerichtet bleibt,

dadurch gekennzeichnet, daß der thermoelektrische Detektor zwei Thermoelemente ($TX_1$, $TX_2$; $TY_1$, $TY_2$) aufweist, deren warme Lötstellen in dem Laserstrahl und auf einem Kreis (C) sind, dessen Ebene senkrecht zur Bahn des Strahls verläuft, und daß die warmen Lötstellen entsprechend einer der Paare in einem Durchmesser des Kreises erscheinen und daß die warmen Lötstellen entsprechend dem anderen Paar auf einem anderen Durchmesser des Kreises erscheinen, der senkrecht zu dem genannten Durchmesser ist, wobei der genannte Durchmesser und der genannte andere Durchmesser jeweils parallel zu den Achsen sind und sich auf der genannten Geraden treffen, wobei die zwei warmen Lötstellen eines jeden Paares sich auf der gleichen Temperatur befinden, wenn der Strahl, der von den Ablenkeinrichtungen stammt, auf das Ziel ausgerichtet ist, um die elektrische Spannungsdifferenz in bezug auf eine Achse zwischen den zwei warmen Lötstellen des Thermoelementpaares zu erhalten, das dieser Achse entspricht, und daß das elektronische Verarbeitungssystem (18) enthält:

eine elektronische Eingangs/Ausgangs-Schnittstelle (49), die mit den Motoren und den Thermoelementen verbunden ist und mit zwei Impulszählern (20X, 20Y) versehen ist, die jeweils mit den Schrittkodierern (19X, 19Y) verbunden sind, und

elektronische Verarbeitungseinrichtungen (21), die mit der Schnittstelle (49) verbunden sind und dazu vorgesehen sind, nach Verstellung des Laserstrahls einesteils den durch jeden Zähler für die Wiederausrichtung des Laserstrahls zu erreichenden Zustand in Abhängigkeit von den elektrischen Spannungsdifferenzen und vom Zustand jedes Zählers vor der Verstellung zu bestimmen und anderenteils die anschließend an jeden Motor anzulegenden Spannungen zur Erzielung der Wiederausrichtung in Abhängigkeit von dem von dem zugehörigen Zähler zu erreichenden Zustand und von den anschließenden Zuständen dieses Zählers zu bestimmen.

2. Einrichtung nach Anspruch 1, dadurch gekennzeichnet, daß das elektronische Verarbeitungssystem (18) ein Tiefpaßfilter enthält, um die von den Thermoelementen durch den Laserstrahl abgegebenen elektrischen Signale so zu filtern, daß Signale beseitigt werden, die von einer Instabilität des Lasersystems herrühren.

3. Einrichtung nach den Ansprüchen 1 und 2, dadurch gekennzeichnet, !aß die elektronischen Verarbeitungseinrichtungen (21) dazu vorgesehen sind, eine Glättung der von den Thermoelementen gemessenen Temperaturen durch Mittelwertbildung aus einer Anzahl von gemessenen Temperaturen durchzuführen, die so gewählt sind, daß die Grenzfrequenz des durch die Glättung so gebildeten Tiefpaßfilters unterhalb der Instabilitätsfrequenz des Lasersystems ist.

**Claims**

1. Control device for the automatic alignment on a target (10) of a laser beam whose transverse energy distribution essentially has a central symmetry comprising:
- means (15) for deflecting the laser beam in the direction of the target (10);
- two motors (16X, 16Y) for modifying the deflection of the beam respectively in accordance with two axes perpendicular to one another and to the line joining the target at their intersection, by modifying the orientation of the reflection means;
- two incremental coders (19X, 19Y) respectively associated with the motors (16X, 16Y), each incremental coder being able to produce electrical pulses which are a function of the angle and the rotation direction of the motor with which it is associted;
- a thermoelectric detector (17) positioned between the target and the deflection means (15) and able to supply, as a function of the misalignment of the beam along at least one of the axes, a voltage difference substantially proportional to the deflection of the beam along the axis in question; and
- an electronic processing system (18) for controlling the motors, as a function of the voltage differences and pulses produced by the incremental coders, so as to keep the beam aligned with the target; characterized in that the thermoelectric detector comprises two pairs of the thermocouples (TX$_1$, TX$_2$; TY$_1$, TY$_2$), whereof the hot junctions are in the laser beam and on a circle (C), whose plane is perpendicular to the path of the beam, in that the hot junctions corresponding to one of the pairs belong to one diameter of the circle and in that the hot junctions corresponding to the other pair belong to another diameter of the circle perpendicular to the said diameter, said diameter and said other diameter being respectively parallel to said axes and meet one another on the said line, the two hot junctions of each pair being at the same temperature when the beam is aligned with the target and coming from the deflection means, so as to obtain the voltage difference relative to an axis between the two hot junctions of the pair of thermocouples corresponding to said axis, and wherein the electronic processing system (18) comprises:
- an input - output electronic interface (49), connected to motors and to the thermocouples and provided with two pulses counters (20X, 20Y) respectively connected to the incremental coders (29X, 29Y); and
- electronic processing means (21) connected to the interface (49) and which, following misalignment of the laser beam, serve to determine on the one hand the state which each counter has to reach for realigning the beam, as a function of the voltage differences, and the state of each counter prior to the misalignment, and on the other hand the voltages to be successively applied to each motor until the realignment is obtained, as a function or the state to be reached by the corresponding counter and the successive states of said counter.

2. Device according to claim 1, characterized in that the electronic processing system (18) comprises a low-pass filter for filtering the electrical signals emitted by the thermocouples excited by the laser beam, so as to eliminate therefrom the signals resulting from an instability of the laser system.

3. Device according to claims 1 and 2, characterized in that the electronic processing means (21) are preferably provided for carrying out an equalizing of the temperatures measured by the thermocouples by forming the mean of a number of measured temperatures, chosen in such a way that the cutt-off freqency of the low-pass filter obtained by the equalization is below the frequency of the instability of the laser system.

FIG. 1

FIG. 2

FIG. 3

0 141 724

FIG. 4

FIG. 5

FIG. 6

28

16 X

34

25

16 Y

7

35

28

29    25    28

TY₂

47    46

45    43    44

Y

Y₁    48

X

AT

X₁

6

45

45

46

47    17

FIG. 7

TY₁

FIG. 8

FIG. 9

FIG. 10

FIG. 11

0 141 724

17

FIG. 12

```
┌─────────────────────────────────────┐
│      Entrée des coefficients K       │
└─────────────────────────────────────┘
                    │
                    ▼
┌─────────────────────────────────────┐
│       Lancement du cadenceur         │
└─────────────────────────────────────┘
                    │
                    ▼
┌─────────────────────────────────────┐
│          Lecture des f.e.m.          │
│          des thermocouples           │      ⎤
└─────────────────────────────────────┘      │
                    │                         ⎬ quatre fois
                    ▼                         │
┌─────────────────────────────────────┐      │
│ Conversion des f.e.m. en températures│      │
│   et lissage des températures        │      ⎦
└─────────────────────────────────────┘
                    │
                    ▼
┌────────────────────────────────────────────────┐
│   Calcul de la différence de température        │
│ entre deux thermocouples diamétralement opposés │
└────────────────────────────────────────────────┘
                    │
                    ▼
┌─────────────────────────────────────┐
│     Calcul de la rotation du moteur  │
│           à effectuer                │
└─────────────────────────────────────┘
                    │
                    ▼
┌─────────────────────────────────────┐
│  Lecture de l'état initial du compteur│
└─────────────────────────────────────┘
                    │
                    ▼
┌─────────────────────────────────────┐
│      Calcul de l'état à atteindre    │
│           par le compteur            │
└─────────────────────────────────────┘
                    │
                    ▼
┌─────────────────────────────────────┐
│  Lecture de l'état actuel du compteur│
└─────────────────────────────────────┘
                    │
                    ▼
┌─────────────────────────────────────┐
│        Commande du moteur            │
└─────────────────────────────────────┘
                    │
                    ▼
          ╱─────────────────────────────╲     NON
         ╱  Période d'échantillonnage du  ╲───────►
         ╲    faisceau laser écoulée ?    ╱
          ╲─────────────────────────────╱
                    │
                   OUI
                    │
                    ▼
```

# FIG. 13